**Europäisches Patentamt**

**European Patent Office**

**Office européen des brevets**

(19)

(11) Veröffentlichungsnummer: **0 313 543 B1**

(12) **EUROPÄISCHE PATENTSCHRIFT**

(45) Veröffentlichungstag der Patentschrift:
24.10.90

(21) Anmeldenummer: 88890209.5

(22) Anmeldetag: 12.08.88

(51) Int. Cl.⁵: **F16L 47/00**, F16L 47/06, F16L 21/00

(54) Verbindungsstück zum Anschluss einer metallischen Armatur an ein Kunststoff-Leitungsrohr für flüssige Medien.

(30) Priorität: 20.10.87 AT 2765/87

(43) Veröffentlichungstag der Anmeldung:
26.04.89 Patentblatt 89/17

(45) Bekanntmachung des Hinweises auf die Patenterteilung:
24.10.90 Patentblatt 90/43

(84) Benannte Vertragsstaaten:
DE ES FR IT

(56) Entgegenhaltungen:
AT-B- 198 577
AT-B- 355 882
DE-A- 3 323 380

(73) Patentinhaber: Egger, Karl, Mitterweg 2,
A-4203 Altenberg(AT)

(72) Erfinder: Egger, Karl, Mitterweg 2, A-4203 Altenberg(AT)

(74) Vertreter: Hübscher, Heiner, Dipl.-Ing. et al,
Spittelwiese 7, A-4020 Linz(AT)

## Beschreibung

Die Erfindung bezieht sich auf ein Verbindungsstück zum Anschluß einer metallischen Armatur an ein Kunststoff-Leitungsrohr für flüssige Medien, bestehend aus einer einerseits mit einem Kunststoff-Leitungsrohr verschweißbaren Kunststoffmuffe, in der anderseits zum Einschrauben der Armatur eine Gewindebüchse aus gegenüber dem Muffenwerkstoff festerem Material eingespritzt ist.

Kunststoffrohre kommen als Leitungsrohre für flüssige Medien in steigendem Maße zum Einsatz, da der Kunststoff, meist ein Polyolefin, gegenüber aggressiven Flüssigkeiten beständiger bzw. widerstandsfähiger als Kupfer und Stahl ist. Außerdem können solche Kunststoff-Leitungsrohre leicht verschweißt werden, so daß sich eine Verringering des technischen Aufwandes beim Leitungsbau ergibt. Schwierigkeiten treten aber auf, wenn an das Kunststoff-Leitungsrohr eine Armatur, die in der Regel aus einem Metall besteht, angeschlossen werden soll. Schweißfähige Kunststoffe sind nämlich nicht fest genug, um eine unmittelbare Schraubverbindung zwischen dem Kunststoff-Leitungsrohr und der metallischen Armatur herstellen zu können. Es tritt eine Weitung des aus Kunststoff bestehenden, das Muttergewinde aufweisenden Leitungsstückes auf, so daß die Dichtheit der Verbindung dann nicht mehr gewährleistet ist, wozu noch kommt, daß die Festigkeit des Kunststoffes durch die im Gewinde auftretende Kerbwirkung wesentlich herabgesetzt wird.

Um diesen Übelstand zu beseitigen, ist es bereits bekannt (AT-PS 378 390), eine mit dem Kunststoff-Leitungsrohr verschweißbare Kunststoffmuffe od.dgl. vorzusehen, in der eine Gewindebüchse aus gegenüber dem Muffenwerkstoff festerem Material, nämlich aus Metall, eingespritzt ist. Aber auch ein solches Verbindungsstück kann nicht voll befriedigen. Abgesehen davon, daß die metallische Gewindebüchse nicht die gewünschte Beständigkeit gegen aggressive Flüssigkeiten wie die Kunststoffmuffe selbst aufweist, wirken Schwermetallionen, z.B. Kupferionen bei Messingarmaturen, auf bestimmte Polymere abbauend und eingenschaftsverändernd. So ist für Messing Polypropylen - der bevorzugte Werkstoff für Heißwasserrohre - nicht zugelassen. Die Messingarmatur muß daher in einem weiteren zusätzlichen und entsprechend aufwendigen Arbeitsgang vernickelt bzw. verchromt werden. Außerdem sind die Ausdehnungskoeffizienten von Metall einerseits und einem Polymer anderseits etwa um eine ZehnerPotenz unterschiedlich, was sich selbstverständlich auf die Festigkeit bzw. Dichtheit der Verbindung zwischen Muffe und Gewindebüchse auswirkt. Schließlich ist es notwendig, der Außenfläche der Gewindebüchse eine besondere Struktur zu verleihen, um eine Verdrehsicherung der Büchse in der Muffe bzw. eine verläßliche Dichtung zwischen Muffe und Büchse zu erreichen.

Es ist auch schon ein Gewindenaschlußstück für aus elastischem Kunststoff bestehende Rohrleitungen bekannt (DE-OS 2 240 548), das ein zu Dichtungszwecken geeignetes, in das Material eingeformtes Gewinde sowie daran an schließend eine Gewindeeinlage aufweist. Dabei ist für diese Gewindeeinlage ein hartes Material, wie Metall, Keramik oder Kunststoff angeführt, ohne jedoch anzugeben, welcher Kunststoff überhaupt geeignet wäre und wie die Gewindeeinlage hergestellt werden solle.

Schließlich ist bereits vorgeschlagen worden., das Anschlußgewinde für die Armatur in der Kunststoffmuffe od.dgl. unmittelbar anzuordnen, jedoch muß dann, um eine Weitung der Muffe und damit Undichtheiten zu vermeiden, die Muffe im Gewindebereich mit einer Metallmanschette versehen werden, was ebenfalls keine befriedigende Lösung darstellt.

Demnach liegt der Erfindung die Aufgabe zugrunde, diese Mängel zu beseitigen und das eingangs geschilderte Verbindungsstück so zu verbessern, daß bei vergleichsweise geringem technischem Aufwand volle Dichtheit erzielt und eine Verstärkungsmanschette auf der Muffe vermieden wird.

Die Erfindung löst die gestellte Aufgabe dadurch, daß die Gewindebüchse im Spritzgußverfahren aus einem Polymer mit einer Struktur hergestellt ist, die im wesentlichen aus Phenylringsystemen besteht, die untereinander durch die Atome bzw. Atomgruppen O, S, SO, $SO_2$, NH, NHCO und/oder OCO verknüpft sind.

Das ganze Verbindungsstück besteht nunmehr aus Kunststoff und ist demnach voll beständig gegen aggressive Flüssigkeiten. Die Gewindebüchse weist durch die besondere Wahl des Polymers die erforderliche Festigkeit auf, um beim Einschrauben der Armatur eine Aufweitung oder Schädigungen der Muffe zu verhindern. Es braucht nicht auf den Metallwerkstoff der Armatur geachtet zu werden, und es ist der Ausdehnungskoeffizient des Kunststoffes der Gewindebüchse nahezu gleich jenem des Werkstoffes der Kunststoffmuffe, so daß keine Lockerungen zu befürchten sind. Schließlich ist der für die Gewindebüchse gewählte Kunststoff wesentlich hitzebeständiger als das umgebende Material der Kunststoffmuffe, so daß das erfindungsgemäße Verbindungsstück ohne weiteres auch für Heißwasserleitungen geeignet ist. Da eine Metallbüchse fehlt, ist das Gewicht geringer, und es ergibt sich schließlich auch gegenüber einer Metallbüchse ein Preisvorteil.

Zur Verbesserung der Festigkeitseigenschaften kann erfindungsgemäß dem Polymer für die Gewindebüchse ein mineralischer Faser- bzw. Füllstoff zugesetzt sein. Als Faser- bzw. Füllstoff kommen Glas- und Carbonfasern, Talkum und Glimmer in Frage. Durch diese Faser- bzw. Füllstoffe wird die Gewindebüchse gegen noch höhere Temperaturen beständig und verzugsfrei, insgesamt also metallähnlicher.

Die Gewindebüchse kann aus Polyätherketon mit 20 Gew.-% Glasfaseranteil gespritzt, dann in eine der Muffe entsprechende Form eingesetzt und mit füllstofffreiem Polypropylen umspritzt werden. Eine andere Möglichkeit besteht darin, für die Gewindebüchse Polyäthersulfon mit 30 Gew.-% Glasfasern zu verwenden und dann die Muffe aus einem linearen Polyäthylencopolymer niedriger Dichte (LLDPE) herzustellen. Günstige Ergebnisse werden auch erzielt, wenn für die Gewindebüchse ein Kunststoffgemisch aus 30 Gew.-% Polyäthylenterephthalat und 40 Gew.-% Polycarbonat verwendet wird und diesem Gemisch 20 Gew.-% Talkum und 10 Gew.-% Carbonfasern zugesetzt werden. Die fertige Gewindebüchse wird dann mit Polybuten umspritzt.

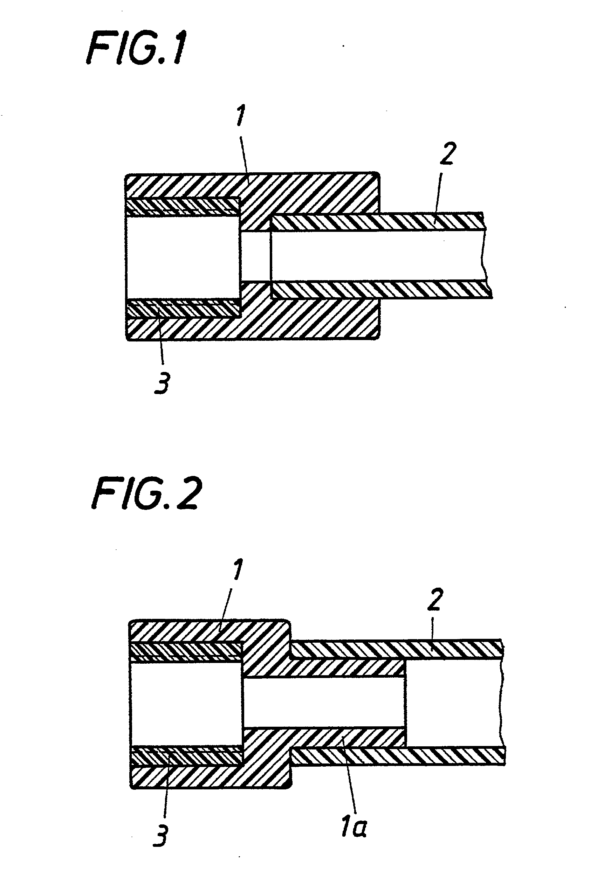

In der Zeichnung ist der Erfindungsgegenstand beispielsweise dargestellt, und zwar zeigen Fig. 1 und 2 zwei verschiedene Ausführungsformen eines Verbindungsstückes im Axialschnitt.

Gemäß Fig. 1 besteht das Verbindungsstück aus einer Kunststoffmuffe 1, in der einerseits ein Kunststoff-Leitungsrohr 2 eingeschweißt ist. Anderseits umschließt der Muffenwerkstoff eine Gewindebüchse 3, die aus einem Polymer besteht, das eine im wesentlichen aus Phenylringsystemen, die untereinander durch die Atome bzw. Atomgruppen 0, S, CO, SO₂, NH, NHCO und/oder OCO verknüpft sind, zusammengesetzte Struktur aufweist. Die Ausbildung nach Fig. 2 unterscheidet sich von jener nach Fig. 1 nur dadurch, daß das Kunststoff-Leitungsrohr 2 auf einen Ansatz 1a der Kunststoffmuffe 1 aufgeschoben und mit diesem Ansatz verschweißt ist. Es überschreitet nicht den Rahmen der Erfindung, wenn statt einer einfachen zylindrischen Muffe ein Formstück, z.B. ein Knie, vorgesehen wird.

## Patentansprüche

1. Verbindungsstück zum Anschluß einer metallischen Armatur an ein Kunststoff-Leitungsrohr (2) für flüssige Medien, bestehend aus einer einerseits mit einem Kunststoff-Leitungsrohr (2) verschweißbaren Kunststoffmuffe (1), in der anderseits zum Einschrauben der Armatur eine Gewindebüchse (3) aus gegenüber dem Muffenwerkstoff festerem Material eingespritzt ist, dadurch gekennzeichnet, daß die Gewindebüchse (3) im Spritzgußverfahren aus einem Polymer mit einer Struktur hergestellt ist, die im wesentlichen aus Phenylringsystemen besteht, die untereinander durch die Atome bzw. Atomgruppen O, S, CO, SO₂, NH, NHCO und/oder OCO verknüpft sind.

2. Verbindungsstück nach Anspruch 1, dadurch gekennzeichnet, daß dem Polymer für die Gewindebüchse (3) ein mineralischer Faser- bzw. Füllstoff zugesetzt ist.

## Claims

1. A connecting member for connecting a metal fitting to a plastic pipe (2) for conducting liquid media, consisting of a plastic sleeve (1), which is adapted to be welded at one end to a plastic pipe (2) and at its other end contains a screw-threaded bushing (3) into which the fitting is adapted to be screwed and which consists of an injection-molded material which is stronger than the material of the sleeve, characterized in that the screw-threaded bushing (3) has been made by injection molding from a polymer which has a structure that substantially consists of phenyl ring systems which are interconnected by the atoms or groups of atoms O, S, SO, SO₂, NH, NHCO and/or OCO.

2. A connecting member according to claim 1, characterized in that a mineral fibrous material and/or filler has been added to the polymer for the screw-threaded bushing (3).

## Revendications

1. Pièce de raccord pour l'assemblage d'un fitting métallique et d'un tuyau (2) en matière plastique pour des liquides, comprenant d'une part un manchon (1) en matière plastique pouvant être soudé au tuyau (2) en matière plastique et dans laquelle est d'autre part injectée une douille taraudée (3) en une matière plus solide que la matière du manchon pour visser le fitting, caractérisé en ce que la douille taraudée (3) est formée par un procédé de moulage par injection à partir d'un polymère ayant une structure formée essentiellement de systèmes d'anneaux phényliques qui sont liés entre eux par des atomes ou groupes d'atomes O, S, CO, SO₂, NH, NHCO et/ou OCO.

2. Pièce de raccord selon la revendication 1, caractérisé en ce qu'une matière minérale de remplissage ou fibreuse est ajoutée au polymère pour la douille filetée (3).

# FIG.1

# FIG.2